(19) Europäisches Patentamt
European Patent Office
Office européen des brevets

(11) **EP 1 856 175 B1**

(12) **EUROPÄISCHE PATENTSCHRIFT**

(45) Veröffentlichungstag und Bekanntmachung des Hinweises auf die Patenterteilung:
**03.12.2008 Patentblatt 2008/49**

(21) Anmeldenummer: 06743196.5

(22) Anmeldetag: **21.02.2006**

(51) Int Cl.:
*C08G 18/12* (2006.01)      *C08G 18/10* (2006.01)
*C08G 18/30* (2006.01)      *C08G 18/32* (2006.01)
*C08G 18/79* (2006.01)      *C08J 9/14* (2006.01)
*C08J 9/02* (2006.01)      *F16F 1/36* (2006.01)
*F16F 9/58* (2006.01)      *C08G 101/00* (2006.01)

(86) Internationale Anmeldenummer:
**PCT/EP2006/060145**

(87) Internationale Veröffentlichungsnummer:
**WO 2006/089890 (31.08.2006 Gazette 2006/35)**

(54) **ZYLINDRISCHE FORMKÖRPER AUF DER BASIS VON ZELLIGEN POLYURETHANELASTOMEREN**

CYLINDRICAL MOULDINGS BASED ON CELLULAR POLYURETHANE ELASTOMERS

CORPS MOULE CYLINDRIQUE A BASE D'ELASTOMERES POLYURETHANNE CELLULAIRES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.02.2005 DE 102005008242**

(43) Veröffentlichungstag der Anmeldung:
**21.11.2007 Patentblatt 2007/47**

(73) Patentinhaber: **BASF SE**
**67056 Ludwigshafen (DE)**

(72) Erfinder:
• **MARTEN, Elke**
**49179 Ostercappeln (DE)**
• **HEIDEMANN, Andreas**
**31592 Stolzenau-Nendorf (DE)**
• **SCHÜTTE, Markus**
**49080 Osnabrück (DE)**
• **STRAUSS, Michael**
**49448 Lemförde (DE)**
• **BOLLMANN, Heinrich**
**49594 Alfhausen (DE)**
• **HANSEN, Ralf**
**49080 Osnabrück (DE)**

(56) Entgegenhaltungen:
EP-A- 0 449 331      WO-A-96/11219
WO-A-20/06056382      FR-A- 2 559 862
US-A- 5 672 635

• **PATENT ABSTRACTS OF JAPAN Bd. 2000, Nr. 02, 29. Februar 2000 (2000-02-29) & JP 11 302355 A (DAINIPPON INK & CHEM INC), 2. November 1999 (1999-11-02)**

EP 1 856 175 B1

**Beschreibung**

Die Erfindung betrifft zylindrische, bevorzugt hohle Formkörper, insbesondere hohle zylindrische Automobilzusatzfedern bevorzugt für Kraftfahrzeugstoßdämpfer, insbesondere bevorzugt Kraftfahrzeugstoßdämpfer enthaltend hohle zylindrische Automobilzusatzfeder auf der Basis von zelligen Polyurethanelastomeren die gegebenenfalls Isocyanurat- und/oder Harnstoffstrukturen enthalten können mit einer Dichte nach DIN EN ISO 845 zwischen 300 und 900 kg/m$^3$, einer Zugfestigkeit nach DIN EN ISO 1798 von $\geq$ 2,0 N/mm$^2$, bevorzugt $\geq$ 2,5 N/mm$^2$, einer Bruchdehnung nach DIN EN ISO 1798 von $\geq$ 200 %, bevorzugt $\geq$ 350 % und einer Weiterreißfestigkeit nach DIN ISO 34-1 B (b) von $\geq$ 8 N/mm und besonders bevorzugt einen Druckverformungsrest (bei 70 °C, 40 % Verformung, 22 Stunden) in Anlehnung an DIN EN ISO 1856 von kleiner 20 %, wobei das zellige Polyurethanelastomer basiert auf der Umsetzung

(i) eines Isocyanatgruppen ausweisenden Prepolymers bevorzugt mit einem NCO-Gehalt zwischen 1 Gew.-% und 30 Gew.-%, besonders bevorzugt zwischen 6 Gew.-% und 20 Gew.-%, insbesondere zwischen 13 und 20 Gew.-% auf der Basis von (a) Diisocyanatodiphenylmethan (MDI) und

(b1) mindestens einem Polyetherdiol mit einem Molekulargewicht zwischen 1500 g/mol und 3000 g/mol auf der Basis von Propylenoxid und/oder Ethylenoxid,

mit

(ii) einer Vernetzerkomponente enthaltend

(b2) mindestens ein Polyetheralkohol mit einer nominellen Funktionalität gegenüber Isocyanaten von 2 bis 3 und einem Molekulargewicht zwischen 1500 g/mol und 6000 g/mol auf der Basis von Propylenoxid und/oder Ethylenoxid,

(c2) Diol mit einem Molekulargewicht zwischen 62 g/mol und 499 g/mol, bevorzugt Butan-1,4-diol und/oder Ethylenglykol, (d) Wasser und (e) Katalysatoren,

wobei die im zylindrischen, bevorzugt hohlen Formkörper enthaltenen Polyole (b) enthaltend (b1) und (b2) sowie gegebenenfalls weitere Polyole (b), bevorzugt die Polyole (b1) und (b2) eine mittlere Polyolmolmasse, insbesondere mittlere Polyolmolmasse der in den Formkörpern enthaltenen Polyole (b) umfassend (b1) und (b2) sowie gegebenenfalls weitere Polyole (b), insbesondere mittlere Polyolmolmasse der Polyetherole (b1) und (b2) in g/mol, zwischen 3000 g/mol und 3700 g/mol, besitzen,

wobei sich die mittlere Polyolmolmasse $\overline{M}$(Polyol) der Polyetherole (b) berechnet nach der folgenden Formel:

$$\overline{M}(Polyol) = \frac{(M_{b11} * m_{b11} + ... + M_{b1n} * m_{b1n}) * W_p + (M_{b21} * m_{b21} + ... + M_{b2n} * m_{b2n}) * W_v}{(m_{b11} + ... + m_{b1n}) * W_p + (m_{b21} + ... + m_{b2n}) * W_v}$$

mit den folgenden Bedeutungen:

| | |
|---|---|
| $\overline{M}$(Polyol) : | mittlere Polyolmolmasse, insbesondere mittlere Polyolmolmasse der in den Formkörpern enthaltenen Polyole (b) umfassend (b1) und (b2) sowie gegebenenfalls weitere Polyole (b), insbesondere mittlere Polyolmolmasse der Polyetherole (b1) und (b2) in g/mol |
| $M_{b11}$ (bzw. $M_{b1n}$): | Molmasse von Polyol b11 (bzw. Polyol b1n) im Prepolymer (i) in g/mol |
| $m_{b11}$ (bzw. $m_{b1n}$): | Massenanteil von Polyol b11 (bzw. Polyol b1n) im Prepolymer (i) in g/g |
| $W_P$: | Massenanteil des Prepolymers (i) im zylindrischen Formkörper, d.h. bezogen auf die Gesamtmasse von Prepolymer (i) und Vernetzer-komponente (ii), in g/g |
| $M_{b21}$ (bzw. $M_{b2n}$): | Molmasse von Polyol b21 (bzw. Polyol b2n) in der Vernetzerkomponente (ii) in g/mol |
| $m_{b21}$ (bzw. $m_{b2n}$): | Massenanteil von Polyol b21 (bzw. Polyol b2n) in der Vernetzerkomponente (ii) in g/g |
| $W_V$: | Massenanteil der Vernetzerkomponente (ii) im zylindrischen Form-körper, d.h. bezogen auf die Gesamtmasse von Prepolymer (i) und Vernetzerkomponente (ii), in g/g. |

Das Molekulargewicht ist das zahlenmittlere Molekulargewicht.

Des weiteren bezieht sich die Erfindung auf Automobilfahrwerke enthaltend Stossdämpfer, auf dessen Kolbenstange ein erfindungsgemäßer hohler zylindrischer Formkörper platziert ist. Außerdem betrifft die Erfindung Verfahren zur Herstellung von zylindrischen, bevorzugt hohlen Formkörpern auf der Basis von zelligen Polyurethanelastomeren mit einer Dichte nach DIN EN ISO 845 zwischen 300 und 900 kg/m$^3$, einer Zugfestigkeit nach DIN EN ISO 1798 von $\geq$ 2 N/mm$^2$, bevorzugt $\geq$ 2,5 N/mm$^2$, einer Bruchdehnung nach DIN EN ISO 1798 von $\geq$ 200 %, bevorzugt $\geq$ 350 % und einer Weiterreißfestigkeit nach DIN ISO 34-1 B (b) von $\geq$ 8 N/mm und besonders bevorzugt einen Druckverformungsrest (bei 70°C, 40 % Verformung, 22 Stunden) in Anlehnung an DIN EN ISO 1856 von kleiner 20 %, wobei das zellige Polyurethanelastomer basiert auf der Umsetzung

(i) eines Isocyanatgruppen ausweisenden Prepolymers bevorzugt mit einem NCO-Gehalt zwischen 1 Gew.-% und 30 Gew-%, besonders bevorzugt zwischen 6 Gew.-% und 20 Gew-%, insbesondere 13 und 20 Gew.-% auf der Basis von (a) Diisocyanatodiphenylmethan (MDI) und
(b1) mindestens einem Polyetherdiol mit einem Molekulargewicht zwischen 1500 g/mol und 3000 g/mol auf der Basis von Ethylenoxid und/oder Propylenoxid,
mit
(ii) einer Vernetzerkomponente enthaltend
(b2) mindestens ein Polyetheralkohol mit einer nominellen Funktionalität gegenüber Isocyanaten von 2 bis 3 und einem Molekulargewicht zwischen 1500 g/mol und 6000 g/mol auf der Basis von Ethylenoxid und/oder Propylenoxid, (c2) Diol mit einem Molekulargewicht zwischen 62 g/mol und 499 g/mol, bevorzugt Butan-1,4-diol und/oder Ethylenglykol, (d) Wasser und (e) Katalysatoren,

wobei die im zylindrischen, bevorzugt hohlen Formkörper enthaltenen Polyole (b) enthaltend (b1) und (b2) sowie gegebenenfalls weitere Polyole (b), bevorzugt die Polyole (b1) und (b2) eine mittlere Polyolmolmasse zwischen 3000 g/mol und 3700 g/mol, besitzen,
wobei sich die mittlere Polyolmolmasse $\overline{M}$(Polyol) der Polyetherole(b) berechnet nach der folgenden Formel:

$$\overline{M}(Polyol)=\frac{(M_{b11}*m_{b11}+...+M_{b1n}*m_{b1n})*W_P+(M_{b21}*m_{b21}+...+M_{b2n}*m_{b2n})*W_v}{(m_{b11}+...+m_{b1n})*W_P+(m_{b21}+...+m_{b2n})*W_v}$$

mit den folgenden Bedeutungen:

| | |
|---|---|
| $\overline{M}$(Polyol) : | mittlere Polyolmolmasse, insbesondere mittlere Polyolmolmasse der in den Formkörpern enthaltenen Polyole (b) umfassend (b1) und (b2) sowie gegebenenfalls weitere Polyole (b), insbesondere mittlere Polyolmolmasse der Polyetherole (b1) und (b2) in g/mol |
| $M_{b11}$ (bzw. $M_{b1n}$): | Molmasse von Polyol b11 (bzw. Polyol b1n) im Prepolymer (i) in g/mol |
| $m_{b11}$ (bzw. $m_{b1n}$): | Massenanteil von Polyol b11 (bzw. Polyol b1n) im Prepolymer (i) in g/g |
| $W_P$: | Massenanteil des Prepolymers (i) im zylindrischen Formkörper, d.h. bezogen auf die Gesamtmasse von Prepolymer (i) und Vernetzerkomponente (ii), in g/g |
| $M_{b21}$ (bzw. $M_{b2n}$): | Molmasse von Polyol b21 bzw. (Polyol b2n) in der Vernetzerkomponente (ii) in g/mol |
| $m_{b21}$ (bzw. $m_{b2n}$): | Massenanteil von Polyol b21 (bzw. Polyol b2n) in der Vernetzerkomponente (ii) in g/g |
| $W_V$: | Massenanteil der Vernetzerkomponente (ii) im zylindrischen Formkörper, d.h. bezogen auf die Gesamtmasse von Prepolymer (i) und Vernetzerkomponente(ii), in g/g. |

Das Molekulargewicht ist das zahlenmittlere Molekulargewicht.

Zellige, beispielsweise mikrozellige Polyisocyanat-Polyadditionsprodukte, üblicherweise Polyurethane und/oder Polyisocyanurate, die gegebenenfalls Harnstoffstrukturen enthalten können und erhältlich sind durch Umsetzung von Isocyanaten mit gegenüber Isocyanaten reaktiven Verbindungen sowie Verfahren zu ihrer Herstellung sind allgemein bekannt.

Eine besondere Ausgestaltung dieser Produkte sind zellige, insbesondere mikrozellige Polyurethanelastomere, die sich von üblichen Polyurethanschaumstoffen durch ihre wesentlich höhere Dichte von üblicherweise 300 bis 900 kg/m$^3$, ihre besonderen physikalischen Eigenschaften und die dadurch bedingten Anwendungsmöglichkeiten unterscheiden. Derartige Polyurethanelastomere finden beispielsweise Anwendung als schwingungs- und stoßdämpfende Elemente, insbesondere im Automobilbau. Die aus Polyurethanelastomeren hergestellten Federungselemente werden in Automobilen beispielsweise innerhalb der Gesamtfederbeinkonstruktion, bestehend aus Stoßdämpfer, Spiralfeder und der Elastomerfeder, auf die Kolbenstange des Stoßdämpfers geschoben.

Im Einsatz sind Bauteile aus mikrozellulären Polyurethanelastomeren teilweise erhöhten Temperaturen in Verbindung mit Feuchtigkeit und dem Einfluss von Mikroben ausgesetzt. Aus diesem Grund ist eine möglichst gute Beständigkeit der Materialien unter diesen schwierigen Bedingungen anzustreben, damit sie über einen möglichst langen Zeitraum den an sie gestellten hohen mechanischen Ansprüchen genügen können. Temperaturen unterhalb der Glastemperatur des zelligen Polyurethanelastomers führen zum Verlust der elastischen Eigenschaften des Bauteils. Für spezielle Anwendungen ist es daher wünschenswert, die Kälteflexibilität der zelligen Polyurethanelastomeren weiter zu verbessern, ohne dabei die guten statischen und dynamischen Eigenschaften dieser Materialien negativ zu beeinflussen.

Weitere Anforderungen an die zelligen Polyisocyanat-Polyadditionsprodukte bestehen in der Erreichung exzellenter dynamisch-mechanischer und statisch-mechanischer Eigenschaften, beispielsweise von hervorragenden Zugfestigkeiten, Bruchdehnungen, Weiterreißfestigkeiten und Druckverformungsresten, damit insbesondere die Polyurethanelastomere die hohen mechanischen Anforderungen, die an die Dämpfungselemente gestellt werden, über einen möglichst langen Zeitraum erfüllen können.

DE-A 36 13 650 und EP-A 178 562 beschreiben die Herstellung elastischer, kompakter oder zelliger Polyurethanelastomere. Die als Polyolkomponente verwendeten Polyetheresterdiole, hergestellt aus Polyoxytetramethylenglykolen mit Molekulargewichten von 162 bis 10000 und organischen Dicarbonsäuren, führen im Vergleich zur Verwendung reiner Polyesterpolyole zu verbesserten Hydrolysebeständigkeiten der Polyurethanelastomere. Nachteilig ist jedoch der hohe Preis der erfindungsgemäßen Polyetheresterpolyole. Zur Kälteflexibilität der erfindungsgemäß hergestellten Polyurethanelastomere wird in beiden Patenten keine Aussage gemacht.

Es ist allgemein bekannt, dass MDI-basierte und damit kostengünstige zellige PUR-Elastomere für Dämpfungselementanwendungen im Automobil einsetzbar sind (WO 96/11219). Zur Erzielung bestmöglicher mechanischer Eigenschaften werden üblicherweise Polyesterole als Weichphase eingesetzt, was eine geringe Hydrolysestabilität in heißem, feuchten Klima ($\geq$ 80°C) zur Folge hat. Gerade bei Dämpfungselementen in Automobilanwendungen werden durch die dynamische Belastung Bauteilinnentemperaturen oberhalb von 70°C erreicht. Bei diesen erhöhten Temperaturen stellt die Konstanz der Materialeigenschaften (z.B. der Zugfestigkeit) in feuchtem warmen Klima eine besondere Herausforderung dar.

Aufgabe der Erfindung war es somit, zylindrische bevorzugt hohle Formkörper, insbesondere Zusatzfedern, die in Automobilfahrwerken auf Kolbenstangen des Stoßdämpfers zum Einsatz kommen, zu entwickeln, die sich durch gute dynamische und mechanische Eigenschaften auszeichnen, wobei insbesondere das hohe Niveau an Zugfestigkeit und Bruchdehnung auch unter feucht warmen Bedingungen auf möglichst hohem Niveau erhalten bleiben sollte. Dabei sollten die Formkörper, insbesondere die Zusatzfedern wirtschaftlich in der Verarbeitung sein.

Die Aufgabe konnte durch die eingangs dargestellten hohlen, bevorzugt zylindrischen Formkörper gelöst werden.

Durch Auswahl des Isocyanats, d.h. des MDI, und einem Polyetherdiol auf Basis von Ethylenoxid und/oder Propylenoxid konnten neben einer Optimierung des eingangs dargestellten Eigenschaftsprofils auch besonders vorteilhafte, geringe Rohstoffkosten realisiert werden. Die gewünschte Federhärte kann durch einen bevorzugten Hartsegmentanteil von 30 bis 50 Gew.-% erzielt werden. Die Berechnung des Hartsegmentanteils (% HS) erfolgt dabei unter Annahme eines vollständigen Umsatzes der Polyurethan bildenden Reaktanden und eines vollkommenen $CO_2$-Austausches nach folgender Gleichung:

$$\% \, HS = \frac{(m_{MDI} + m_{C1}) * W_P + (m_{C2}) * W_V - (m_{H2O} * W_V * 44/18)}{(m_{MDI} + m_{C1} + m_{b1}) * W_P + (m_{C2} + m_{H2O} + m_{b2}) * W_V} * 100$$

%HS: Massenanteil an Hartsegment im zylindrischen Formkörper in Gew.-%

$m_{MDI}$: Massenanteil an MDI (a) im Prepolymer (i) in g/g

$m_{C1}$: Massenanteil an Kettenverlängerer (c1) im Prepolymer (i) in g/g

$W_P$: Massenanteil des Prepolymers (i) im zylindrischen Formkörper, d.h.bezogen auf die Gesamtmasse von Prepolymer (i) und Vernet-zerkomponente (ii), in g/g

$m_{C2}$: Masseanteil an Kettenverlängerer (c2) in der Vernetzerkomponente (ii) in g/g

$m_{H2O}$: Massenanteil an Wasser in der Vernetzerkomponente(ii) in g/g

$W_V$: Massenanteil der Vernetzerkomponente (ii) im zylindrischen Formkörper, d.h. bezogen auf die Gesamtmasse von Prepolymer (i) und Vernetzerkomponente (ii), in g/g

$m_{b1}$: Massenanateil an Polyol b1 im Prepolymer (i) in g/g

$m_{b2}$: Massenanateil an Polyol b2 in der Vernetzerkomponente ii in g/g

Bei der Auswahl der Polyetherole bestand die Herausforderung darin, geeignete Polyole zu wählen, die einen Schaum ergeben, der ein hohes mechanisches Niveau sowohl bei Normklima als auch in heißem, feuchten Klima ergibt und außerdem gute Tieftemperatureigenschaften aufweist. Dabei erwies sich überraschender Weise die mittlere Polyolmolmasse $\overline{M}$(Polyol) der Polyetherole (b) als die bestimmende Größe. Mittlere Polyolmolmassen von kleiner als 3900 g/mol ergaben Schäume, deren Zugfestigkeit auch nach 70-tägiger Lagerung in 80°C temperiertem Wasser nur um etwa 40 % (bezogen auf den Anfangswert) abgesunken waren (siehe auch Beispiele, zu den Prüfbedingungen siehe Erläuterungen von Tabelle 1). Schäume mit einer mittleren Polyolmolmasse oberhalb von 3900 g/mol ergaben Schäume, deren Zugfestigkeiten während der oben genannten Lagerbedingungen deutlich stärker abfielen (um mehr als 60 %, bezogen auf den Anfangswert). Mit sinkender Polyolmolmasse verschlechtern sich allgemein die Tieftemperatureigenschaften. Für die erfindungsgemäßen Schäume wurden vergleichsweise gute Tieftemperatureigenschaften gemessen (Maximum des Verlustmoduls G"$_{max}$= -53°C, 1 Hz Messfrequenz, Heizrate 2°C/min, ISO 6721-7).

Unter dem Ausdruck "zylindrisch" sind nicht nur Formkörper zu verstehen, die eine kreisrunde Grundfläche und einen konstanten Radius über die Höhe aufweisen, sondern auch Formkörper, die einen ovalen Querschnitt und/ oder eine ovale Grundfläche besitzen. Auch Formkörper, bei denen lediglich Abschnitte entlang der Längsachse einen runden oder ovalen Querschnitt aufweisen, sind in dieser Schrift per Definition von dem Ausdruck "zylindrisch" umfasst. Ebenso fallen Formkörper unter diesen Begriff "zylindrisch", bei denen der Radius über die Länge variiert, bei denen also der Formkörper Einschnürungen und/oder Ausstülpungen aufweist. Bevorzugt sind zylindrische Formkörper, die einen kreisrunden Querschnitt ausweisen. Ein Beispiel für eine zylindrische Zusatzfeder ist in der Abbildung 1 bei den Beispielen angegeben.

Unter dem Ausdruck "hohle" Formkörper sind in dieser Schrift per Definition solche Formkörper zu verstehen, die entlang der Längsachse, bevorzugt konzentrisch entlang der Längsachse eine Aushöhlung aufweisen. Bevorzugt ist unter dem Ausdruck "hohl" zu verstehen, dass in dem Formkörper ein durchgehender, bevorzugt konzentrischer Hohlraum entlang der gesamten Längsachse des Formkörpers vorliegt.

Diese bevorzugten Formen, d.h. die hohlen zylindrischen Formkörper sind als Zusatzfedern allgemein bekannt und vielfältig im Einsatz. Die Herstellung dieser Formkörper in entsprechenden Formen ist vielfältig beschrieben und dem Fachmann allgemein bekannt, z.B. aus DE-C 44 38 143.

Gemäß des erfindungsgemäßen Verfahrens wird ein Isocyanatgruppen aufweisendes Prepolymer (i), das bevorzugt den eingangs dargestellten NCO-Gehalt aufweist, mit einer Vernetzerkomponente (ii) umgesetzt. In der Vernetzerkomponente sind die gegenüber Isocyanaten reaktiven Verbindungen, d.h. vor allem (b2) und bevorzugt (c2) Kettenverlängerer und/oder Vernetzungmittel sowie (d) Wasser, (e) Katalysatoren und gegebenenfalls weitere gegenüber Isocyanaten reaktive Verbindungen (b) und gegebenenfalls Treibmittel (f) und/oder Hilfsmittel (g) enthalten. Diese Einsatzkomponenten werden an späterer Stelle ausführlich beschrieben.

Das Prepolymer basiert auf der Umsetzung von (a) Isocyanat, erfindungsgemäß MDI sowie gegebenenfalls weiteren Isocyanaten, bevorzugt ausschließlich MDI, mit (b1) Polyetherdiol und bevorzugt dem (c1) Diol, bevorzugt Glykol. Dabei können gegebenenfalls weitere gegenüber Isocyanaten reaktive Verbindungen (b) und/oder (c) zusätzlich zu (b1) und bevorzugt (c1) eingesetzt werden.

Als (b1) Polyetherdiol mit einem Molekulargewicht zwischen 1500 g/mol und 3000 g/mol auf der Basis von Propylenoxid und/oder Ethylenoxidkönnen zur Herstellung der Prepolymere (i) können nach allgemein bekannten Verfahren mit Ethylenoxid und/oder Propylenxid alkoxylierte Startsubstanzen, bevorzugt Diole, beispielsweise Ethylenglykol, Propylenglykol, Diethylenglykol, Dipropylenglykol, Triethylenglykol, Tripropylenglykol, Butan-1,4-diol, Hexan-1,6-diol, besonders bevorzugt Propylenglykol eingesetzt werden. Die Polyetherdiole können bevorzugt propoxylierte Diole sein, es können aber auch ethoxylierte Diole oder gemischte Polyetherdiole eingesetzt werden, wobei die Alkylenoxide blockweise oder statistisch in dem Polyetherdiol (b1) angeordnet sein können. Wie auch an späterer Stelle ausgeführt, können gegebenenfalls zusätzlich zu den Polyetherdiolen (b1) weitere Polyetheralkohole eingesetzt werden, beispielsweise auch Polyethermonoalkohole, die bei der Herstellung der Polyetherdiole entstehen. Die mittlere tatsächliche Funktionalität der insgesamt zur Herstellung des Prepolymers (i) eingesetzten gegenüber Isocyanaten reaktiven Polyetherdiole (b1) beträgt bevorzugt zwischen 1,8 und 2,0.

Als (c1) können Diole, eingesetzt werden, bevorzugt Diethylenglykol, Triethylenglykol, Dipropylenglykol und/ oder Triethylenglykol, besonders bevorzugt Dipropylenglykol und/oder Tripropylenglykol, insbesondere Tripropylenglykol.

Bevorzugt sind somit zylindrische, bevorzugt hohle Formkörper, bei denen das Isocyanatgruppen aufweisende Prepolymer (i) basiert auf der Umsetzung von (a) Diisocyanatodiphenylmethan (MDI), (b1) Polyetherdiolen mit einem Molekulargewicht zwischen 1500 g/mol und 3000 g/mol, bevorzugt 2000 g/mol auf der Basis von Propylenoxid und/oder Ethylenoxid sowie (c1) Diol mit einem Molekulargewicht zwischen 62 g/mol und 499 g/mol, bevorzugt 106 g/mol und 499 g/mol, bevorzugt Diethylenglykol, Triethylenglykol, Dipropylenglykol und/oder Triethylenglykol, besonders bevorzugt Dipropylenglykol und/oder Tripropylenglykol, insbesondere Tripropylenglykol (als Kettenverlängerungsmittel (c1)).

Die Vernetzerkomponente (ii) enthält erfindungsgemäß (b2) als gegenüber Isocyanten reaktive Verbindung. Gegebenenfalls können in der Vernetzerkomponente (ii) zusätzlich zu (b2) weitere gegenüber Isocyanaten reaktive Verbindungen (b) enthalten sein, die nicht unter die Definition von (b2) fallen, sofern insgesamt die erfindungsgemäße mittlere Polymolmasse über alle Polyole (b) erfüllt wird. Als (b2) Polyetheralkohole mit einer nominellen Funktionalität gegenüber Isocyanaten von 2 bis 3, d.h. bevorzugt mit nominell 2 oder 3 Hydroxylgruppen und einem Molekulargewicht zwischen 1500 g/mol und 6000 g/mol auf der Basis von Propylenoxid und/oder Ethylenoxidkönnen können zur Herstellung der Vernetzerkomponente (ii) nach allgemein bekannten Verfahren mit Ethylenoxid und/oder Propylenxid alkoxylierte Startsubstanzen, bevorzugt Diole und/oder Triole, beispielsweise Ethylenglykol, Propylenglykol, Diethylenglykol, Dipropylenglykol, Triethylenglykol, Tripropylenglykol, Butan-1,4-diol, Hexan-1,6-diol, Glycerin, Trimethylolpropan, bevorzugt Propylenglykol und Glycerin eingesetzt werden. Die Polyetherdi- und/oder triole können propoxylierte Di- und/oder Triole sein, es können aber auch ethoxylierte Di- und/oder Triole oder gemischte Polyetherdi- und/oder Triole eingesetzt werden, wobei die Alkylenoxide blockweise oder statistisch in dem Polyetheralkohol angeordnet sein können. Unter dem Ausdruck "nominell" bezüglich der Funktionalität gegenüber Isocyanaten ist zu verstehen, dass die Startsubstanz zur Herstellung der Polyetheralkohole diese Anzahl an gegenüber Isocyanaten reaktiven Funktionen, bevorzugt Hydroxylgruppen aufweist. Aufgrund der Alkoxylierung der Startsubstanz ist die tatsächliche mittlere Funktionalität der Polyetheralkohole üblicherweise geringer. Alternativ oder ergänzend zu dem Merkmal "nominelle Funktionalität" kann man auch die mittlere tatsächliche Funktionalität angeben, die im vorliegenden Falle bevorzugt zwischen 1,6 und 2,9 beträgt. Bei den Polyetheralkoholen (b2) kann es um eine Mischung von Polyetheralkolen handeln, wobei die Mischung die erfindungsgemäße Charakteriatik (z.B. Funktionalität von 2 bis 3 und Molekulargewicht zwischen 1500 und 6000 g/mol) aufweist. Bevorzugt weist (b2) endständige Ethylenoxideinheiten auf.

Als (c2) Diole, d.h. als Kettenverlängerungmittel bevorzugt mit einem Molekulargewicht zwischen 62 g/mol und 499 g/mol können zur Herstellung der Vernetzerkomponente (ii) allgemein bekannte Diole mit einem entsprechenden Molekulargewicht eingesetzt werden, beispielsweise Ethylenglykol, Propylenglykol, Diethylenglykol, Diproyplenglykol, Triethylenglykol, Tripropylenglykol, Butan-1,4-diol, Hexan-1,6-diol, bevorzugt Butan-1,4-diol und/oder Ethylenglykol.

Besonders bevorzugt sind dabei bevorzugt hohle zylindrische Formkörper, bei denen die Vernetzerkomponente (ii) als bevorzugt physikalisches Treibmittel (f) Heptan, n-Pentan, 2-Methylbutan und/oder Cyclopentan enthält. Durch die zusätzliche Treibwirkung (zusätzlich zum erfindungsgemäßen Wasser (d)) wird sichergestellt, dass auch komplex geformte Zusatzfedern und/oder Formkörper mit Raumgewichten zwischen 300 und 450 g/l gleichmäßig ausgeschäumt werden.

Die erfindungsgemäßen zylindrischen bevorzugt hohlen Formkörper weisen bevorzugt eine Höhe zwischen 25 mm und 1000 mm, besonders bevorzugt 25 mm und 200 mm, einen maximalen äußeren Durchmesser zwischen 40 mm und 700 mm, besonders bevorzugt zwischen 40 mm und 150 mm und einen minimalen Durchmesser des Hohlraums zwischen 0 mm und 90 mm, besonders bevorzugt zwischen 8 mm und 35 mm auf.

Die erfindungsgemäßen zylindrischen bevorzugt hohlen Formkörper weisen bevorzugt eine Glastemperatur kleiner -33°C, besonders bevorzugt kleiner -40°C auf (ISO 6721-7, 1 Hz Messfrequenz, Heizrate 2°C/min, Maximum des Verlustmoduls $G"_{max}$).

Die erfindungsgemäßen zylindrischen bevorzugt hohlen Formkörper weisen bei einer Dichte von 500 g/l bevorzugt eine Shore A Oberflächenhärte nach DIN 53505-A von 30 bis 80 bevorzugt zwischen 40 und 65 auf.

Verwendung finden die erfindungsgemäßen zylindrischen bevorzugt hohlen Formkörper, im Folgenden auch als "Formkörper" bezeichnet, als Dämpfungselemente im Fahrzeugbau, beispielsweise im Automobilbau, z.B. als Zusatzfedern, Anschlagpuffer, Querlenkerlager, Hinterachsfahrschemellager, Stabilisator-Lager, Längsstreben-Lager, Federbein-Stützlager, Stoßdämpferlager, Lager für Dreieckslenker und/oder als auf der Felge befindliches Notrad, das beispielsweise bei einem Reifenschaden bewirkt, dass das Fahrzeug auf dem zelligen Polyisocyanat-Polyadditionsprodukt fährt und steuerbar bleibt.

Die erfindungsgemäßen Formkörper, d.h. die zelligen Polyisocyanat-Polyadditionsprodukte, bevorzugt die mikrozelligen Polyurethanelastomere, weisen demnach nicht nur exzellente mechanische und dynamische Eigenschaften auf, insbesondere die Beständigkeit in feucht warmen Klima konnte bei guter Kälteflexibilität erfindungsgemäß deutlich verbessert werden. Insbesondere diese Kombination besonders vorteilhafter Eigenschaften konnte bislang in dieser Form nicht erreicht werden.

Das erfindungsgemäße Verfahren zur Herstellung der erfindungsgemäßen Formkörper erfolgt wie eingangs dargestellt erfindungsgemäß dadurch, dass man in einer Form

(i) ein Isocyanatgruppen ausweisendes Prepolymer bevorzugt mit einem NCO-Gehalt zwischen 1 Gew-% und 30 Gew-%, besonders bevorzugt zwischen 6 Gew-% und 20 Gew-%, insbesondere 13 und 20 Gew-% auf der Basis von (a) Diisocyanatodiphenylmethan (MDI), und
(b1) mindestens einem Polyetherdiol mit einem Molekulargewicht zwischen 1500 g/mol und 3000 g/mol auf der Basis von Ethylenoxid und/oder Propylenoxid,
mit

(ii) einer Vernetzerkomponente enthaltend
(b2) Polyetheralkohole mit einer nominellen Funktionalität gegenüber Isocyanaten von 2 bis 3 und einem Molekulargewicht zwischen 1500 g/mol und 6000 g/mol auf der Basis von Ethylenoxid und/oder Propylenoxid,
(c2) Diol mit einem Molekulargewicht zwischen 62 g/mol und 499 g/mol, bevorzugt Butan-1,4-diol und/oder Ethylenglykol, (d) Wasser und (e) Katalysatoren,

umsetzt, wobei die im zylindrischen, bevorzugt hohlen Formkörper enthaltenen Polyole (b) enthaltend (b1) und (b2) sowie gegebenenfalls weitere Polyole (b), bevorzugt die Polyole (b1) und (b2) eine mittlere Polyolmolmasse zwischen 3000 g/mol und 3700 g/mol, besitzen, wobei sich die mittlere Polyolmolmasse $\overline{M}$(Polyol) berechnet nach der folgenden Formel:

$$\overline{M}(\text{Polyol}) = \frac{(M_{b11} * m_{b11} + \dots + M_{b1n} * m_{b1n}) * W_P + (M_{b21} * m_{b21} + \dots + M_{b2n} * m_{b2n}) * W_V}{(m_{b11} + \dots + m_{b1n}) * W_P + (m_{b21} + \dots + m_{b2n}) * W_V}$$

mit den folgenden Bedeutungen:

$\overline{M}(\text{Polyol})$ : mittlere Polyolmolmasse, insbesondere mittlere Polyolmolmasse der in den Formkörpern enthaltenen Polyole (b) umfassend (b1) und (b2) sowie gegebenenfalls weitere Polyole (b) , insbesondere mittlere Polyolmolmasse der Polyetherole (b1) und (b2), in g/mol

$M_{b11}$ (bzw. $M_{b1n}$): Molmasse von Polyol b11 (bzw. Polyol b1n) im Prepolymer (i) in g/mol

$m_{b11}$ (bzw. $m_{b1n}$): Massenanteil von Polyol b11 (bzw. Polyol b1n) im Prepolymer (i) in g/g

$W_P$: Massenanteil des Prepolymers (i) im zylindrischen Formkörper, d.h. bezogen auf die Gesamtmasse von Prepolymer (i) und Vernetzerkomponente (ii), in g/g

$M_{b21}$ (bzw. $M_{b2n}$): Molmasse von Polyol b21 bzw. (Polyol b2n) in der Vernetzerkomponente (ii) in g/mol

$m_{b21}$ (bzw. $m_{b2n}$): Massenanteil von Polyol b21 (bzw. Polyol b2n) in der Vernetzerkomponente (ii) in g/g

$W_V$: Massenanteil der Vernetzerkomponente (ii) im zylindrischen Formkörper, d.h. bezogen auf die Gesamtmasse von Prepolymer (i) und Vernetzerkomponente (ii), in g/g.

Das Molekulargewicht ist das zahlenmittlere Molekulargewicht.

Bevorzugt wird man dabei in einem zweistufigen Verfahren in der ersten Stufe das Isocyanatgruppen aufweisende Prepolymer (i) herstellen durch Umsetzung von (a) Diisocyanatodiphenylmethan (MDI) mit (b1) mindestens einem Polyetherdiolen mit einem Molekulargewicht zwischen 1500 g/mol und 3000 g/mol auf der Basis von Ethylenoxid und/ oder Propylenoxid, und (c1) mindestens einem Diol, bevorzugt Glykol, bevorzugt Dipropylenglykol und/oder Tripropylenglykol, insbesondere Tripropylenglykol und dieses Prepolymer (i) in der zweiten Stufe in einer Form mit der Vernetzerkomponente (ii) umsetzen.

Dabei basiert das Prepolymer (i) bevorzugt auf Diisocyanatodiphenylmethan (MDI) und Isocyanaten, die Carbodiimidstrukturen und/oder Uretoniminstrukturen aufweisen.

Wie bereits dargestellt kann die Vernetzerkomponente bevorzugt als Treibmittel (f) bevorzugt zusätzlich zum Wasser n-Pentan, 2-Methylbutan und/oder Cyclopentan enthalten.

Es kann gerade zur Herstellung der erfindungsgemäßen Formkörper, insbesondere der Zusatzfedern von besonderem Vorteil sein, wenn man die zylindrischen Formkörper nach der Entformung aus der Form bei einer Temperatur zwischen 80°C und 130°C für eine Dauer zwischen 3 und 48 Stunden tempert, d.h. erhitzt. Dadurch kann der Druckverformungsrest in Anlehnung an DIN EN ISO 1856 (bei 70°C, 40 % Verformung, 22 Stunden) verringert werden.

Die Herstellung der Formteile wird bevorzugt bei einem NCO/OH-Verhältnis von 0,85 bis 1,2 (=Index) durchgeführt. Die erwärmten Ausgangskomponenten werden bevorzugt gemischt und in einer der gewünschten Formteildichte entsprechenden Menge in ein beheiztes, bevorzugt dichtschließendes Formwerkzeug gebracht.

Die Formteile sind üblicherweise nach 5 bis 20 Minuten ausgehärtet und damit entformbar.

Die Menge des in das Formwerkzeug eingebrachten Reaktionsgemisches wird bevorzugt so bemessen, dass die erhaltenen Formkörper die bereits dargestellte Dichte aufweisen. Die erfindungsgemäß erhältlichen zelligen Polyisocyanat-Polyadditionsprodukte weisen bevorzugt eine Dichte nach DIN EN ISO 845 zwischen 300 und 900 kg/m$^3$, besonders bevorzugt 300 bis 600 kg/m$^3$ auf.

Die Ausgangskomponenten werden üblicherweise mit einer Temperatur von 20 bis 80°C, vorzugsweise von 30 bis 70°C, in das Formwerkzeug eingebracht. Die Verdichtungsgrade zur Herstellung der Formkörper liegen zwischen 1,1 und 5, vorzugsweise zwischen 1,5 und 4.

Die erfindungsgemäßen zelligen Polyisocyanat-Polyadditionsprodukte werden zweckmäßigerweise nach dem one shot-Verfahren mit Hilfe der Niederdruck-Technik oder insbesondere der bekannten Reaktionsspritzguß-Technik (RIM) hergestellt. Die Reaktion wird insbesondere unter Verdichtung in einem geschlossenen Formwerkzeug durchgeführt.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird in einem zweistufigen Prozess zunächst ein NCO-gruppenhaltiges Prepolymeres (i) hergestellt, das anschließend mittel Hochdruck- oder Niederdrucktechnik mit der Vernetzerkomponente (ii) in der Form umgesetzt wird.

Die Herstellung des Prepolymeren (i) kann bevorzugt derart erfolgen, dass man das Polyetherdiol als (b1) auf der Basis von Propylenoxid und/oder Ethylenoxid und gegebenenfalls das Diol als (c1) mit dem MDI als (a) im Überschuss üblicherweise bei Temperaturen von 70°C bis 100°C, vorzugsweise von 70°C bis 90°C, zur Reaktion bringt. Die Reaktionszeit ist auf das Erreichen des theoretischen NCO-Gehaltes bemessen.

Wie bereits dargestellt erfolgt die erfindungsgemäße Herstellung der Formkörper bevorzugt in einem zweistufigen Verfahren, indem man in der ersten Stufe durch Umsetzung von (a) mit (b1) und gegebenenfalls (c1) ein Isocyanatgruppen aufweisendes Prepolymer (i) herstellt und dieses Prepolymer (i) in der zweiten Stufe in einer Form mit einer Vernetzerkomponente (ii) enthaltend Polyetherol (b2), Diol (c2) und Wasser (d) umsetzt, wobei Katalysatoren (e) und gegebenenfalls Treibmittel (f) und/oder Hilfsmittel (g) in dem Prepolymer und/oder der Vernetzerkomponente, bevorzugt in der Vernetzerkomponente (ii) enthalten sind.

Zur Verbesserung der Entformung der erfindungsgemäß hergestellten Formkörper hat es sich als vorteilhaft erwiesen, die Formwerkzeuginnenflächen zumindest zu Beginn einer Produktionsreihe mit üblichen äußeren Formtrennmitteln, beispielsweise mit wässrigen Seifenlösungen auf Wachsbasis oder insbesondere auf Silikonbasis, zu beschichten.

Die Entformzeiten betragen in Abhängigkeit von der Größe und Geometrie des Formteils durchschnittlich 5 bis 20 Minuten.

Nach der Herstellung der Formteile in der Form können die Formteile bevorzugt für eine Dauer von 3 bis 48 Stunden bei Temperatur zwischen 80°C und 130°C getempert, d.h. erwärmt werden.

Zu den Ausgangskomponenten enthaltend in dem erfindungsgemäßen Reaktionsgemisch kann folgendes ausgeführt werden:

Als Isocyanat (a) wird erfindungsgemäß 2,2'-, 2,4'- und/oder 4,4'-Diphenylmethandiisocyanat (MDI) eingesetzt, z. B. MDI enthaltend zwischen 75 und 85 Gew.-%, bevorzugt 80 Gew.-% 4,4'-Methylendiphenyldiisocyanat und zwischen 15 Gew.-% und 25 Gew.-%, bevorzugt 20 Gew.-% 2,4'-Methylendiphenyldiisocyanat. Dabei kann das MDI gegebenenfalls modifiziert eingesetzt werden. Gegebenenfalls können zusätzlich zum MDI weitere, allgemein bekannte (cyclo) aliphatische und/oder aromatische Polyisocyanate eingesetzt werden. In Frage kommen dabei besonders aromatische Diisocyanate, vorzugsweise 1,5-Naphthylendiisocyanat (NDI), 2,4- und/oder 2,6-Toluylendiisocyanat (TDI), 3,3'-Dimethyl-diphenyl-diisocyanat, 1,2-Diphenylethandiisocyanat, p-Phenylendiisocyanat und/oder (cyclo)aliphatische Isocyanate wie z.B. 1,6-Hexamethylendiisocyanat, 1-Isocyanato-3,3,5-trimethyl-5-isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden.

Als gegenüber Isocyanaten reaktive Verbindungen (b) kommen die bereits dargestellten Polyetheralkohole (b1) im Prepolymer (i) sowie (b2) in der Vernetzerkomponente (ii) zum Einsatz. Diese können gegebenenfalls zusammen mit allgemein bekannten Polyhydroxylverbindungen, bevorzugt Polyetheralkhole und/oder Polyesteralkohole, besonders bevorzugt Polyetheralkohole eingesetzt werden, bevorzugt solchen mit einer Funktionalität gegenüber Isocyanatgruppen von 2 bis 3 und bevorzugt einem Molekulargewicht von 1500 bis 6000 g/mol. Bevorzugt beträgt der Gewichtsanteil der Polyetherdiolen (b1) mit einem Molekulargewicht zwischen 1500 g/mol und 3000 g/mol auf der Basis von Propylenoxid und/oder Ethylenoxid an dem Gesamtgewicht der zur Herstellung des Prepolymers (i) eingesetzten gegenüber Isocyanaten reaktiven Verbindungen (b) mindestens 70 Gew.-%, besonders bevorzugt mindestens 80 Gew.-%, insbesondere mindestens 90 Gew.-%, jeweils bezogen auf das Gesamtgewicht der zur Herstellung des Prepolymers eingesetzten gegenüber Isocyanaten reaktiven Verbindungen (b). Bevorzugt beträgt der Gewichtsanteil der Polyetheralkohole (b2) mit einer nominellen Funktionalität gegenüber Isocyanaten von 2 bis 3 und einem Molekulargewicht zwischen 1500 g/mol und 6000 g/mol auf der Basis von Propylenoxid und/oder Ethylenoxid an dem Gesamtgewicht der in der Vernetzerkomponente (ii) eingesetzten gegenüber Isocyanaten reaktiven Verbindungen (b) mindestens 60 Gew.-%, besonders bevorzugt mindestens 70 Gew.-%, insbesondere mindestens 80 Gew.-%, jeweils bezogen auf das Gesamtgewicht der gegenüber Isocyanaten reaktiven Verbindungen (b) in der Vernetzerkomponente (ii). Besonders bevorzugt werden ausschließlich die erfindungsgemäßen Polyetheralkohle (b1) und (b2) als Komponente (b) eingesetzt. Wie bereits beschrieben kann es sich bei den Polyetheralkoholen (b1) bzw. (b2) jeweils um Mischungen von Polyetheralkolen handeln, wobei die jeweilige Mischung die jeweilige erfindungsgemäße Charakteristik (z.B. Funktionalität, Molekulargewicht) aufweist.

Zusätzlich zu den bereits beschriebenen gegenüber Isocyanaten reaktiven Komponenten (c1) und (c2) können des weiteren Kettenverlängerungs- und/oder Vernetzungsmitteln (c) mit einem Molekulargewicht von kleiner 500 g/mol, bevorzugt 62 g/mol bis 499 g/mol eingesetzt werden, beispielsweise ausgewählt aus der Gruppe der di-und/oder trifunktionellen Alkohole, di- bis tetrafunktionellen Polyoxyalkylen-polyole und der alkylsubstituierten aromatischen Diamine oder von Mischungen aus mindestens zwei der genannten Kettenverlängerungs- und/oder Vernetzungsmittel. Als (c) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylenglykol und/oder di-bis tetrafunktionelle Polyoxyalkylen-polyole. Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bis-ethylenglykoloder -butandiol-1,4, Hydroxyalkylenether des Hydrochinons oder Resorcins, wie z.B. 1,4-Di-(b-hydroxyethyl)-hydrochinon oder 1,3-Di(b-hydroxyethyl)-resorcin, Alkanolamine mit 2 bis 12 Kohlenstoffatomen, wie z.B. Ethanolamin, 2-Aminopropanol und 3-Amino-2,2-dimethylpropanol, N-Alkyldialkanolamine, wie z.B. N-Methyl- und N-Ethyldiethanolamin. Als höherfunktionelle Vernetzungsmittel (c) seien beispielsweise tri- und höherfunktionelle Alkohole, wie z.B. Glycerin, Trimethylolpropan, Pentaerythrit und Trihydroxycyclohexane sowie Trialkanolamine, wie z.B. Triethanolamin genannt. Als Kettenverlängerungsmittel vorzüglich bewährt haben sich und daher bevorzugt verwendet werden alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind. Zur Herstellung der erfindungsgemäßen Formkörper können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4-und -2,6-phenylendiaminen, sogenanntes DETDA, Isomerengemische aus 3,3'-di-oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet werden. Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei-und/oder dreiwertigen Alkoholen oder Dialkylenglykolen zu verwenden.

Erfindungsgemäß wird die Herstellung der zelligen Polyisocyanat-Polyadditionsprodukte bevorzugt in Gegenwart von Wasser (d) durchgeführt. Das Wasser wirkt sowohl als Vernetzer unter Bildung von Harnstoffgruppen als auch aufgrund der Reaktion mit Isocyanatgruppen unter Bildung von Kohlendioxid als Treibmittel. Aufgrund dieser doppelten Funktion wird es in dieser Schrift getrennt von (c) und (f) aufgeführt. Per Definition enthalten die Komponenten (c) und (f) somit kein Wasser, das per Definition ausschließlich als (d) aufgeführt wird. Die Wassermengen, die zweckmäßigerweise verwendet werden können, betragen 0,01 bis 3 Gew.-%, vorzugsweise 0,1 bis 0,6 Gew.-%, bezogen auf das Gewicht der Vernetzerkomponente (ii).

Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (e) zugefügt werden. Die Katalysatoren (e) können einzeln wie auch in Abmischung miteinander zugegeben werden. Vorzugsweise sind dieses metallorganische Verbindungen, wie Zinn-(II)-Verbindungen oder Zinn-(IV)-Verbindungen von organischen Carbonsäuren, z. B. Zinn-(II)-dioctoat, Zinn-(II)-dilaurat, Dibutylzinndiacetat, Dibutylzinndilaurat, Di-n-octylzinn -(IV)- bis (2-ethylhexylthioglycolat) und n-Octylzinn - (IV)- tris (2-ethylhexylthioglycolat) und tertiäre Amine wie Tetramethylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylamino-)Butylpiperazin, N,N,N',N'',N''-Pentamethyldiethylendiamin oder ähnliche. Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-Gruppen. Je nach einzustellender Reaktivität gelangen die Katalysatoren (e) in Mengen von 0,001 bis 0,5 Gew.-%, bezogen auf die Vernetzerkomponente (ii), zur Anwendung.

Gegebenenfalls können in der Polyurethanherstellung übliche Treibmittel (f) verwendet werden. Geeignet sind beispielsweise niedrig siedende Flüssigkeiten, die unter dem Einfluss der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlendioxid, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden. Bevorzugt werden n- und/oder iso-Pentan und/oder Cyclopentan als Treibmittel (f) eingesetzt. Die zweckmäßigste Menge an niedrigsiedender Flüssigkeit zur Herstellung derartiger zellhaltiger elastischer Formkörper aus Urethan- und Harnstoffgruppen enthaltender Elastomere hängt ab von der Dichte, die man erreichen will, sowie von der Menge des erfindungsgemäßen Wassers (d). Im allgemeinen liefern Mengen von 0,5 bis 10 Gew.-%, vorzugsweise 1 bis 5 Gew.-%, bezogen auf das Gewicht der Vernetzerkomponente (ii), zufriedenstellende Ergebnisse. Besonders bevorzugt wird ausschließlich Wasser (d) als Treibmittel eingesetzt, insbesondere wenn die Komponenten (i) und (ii) mittels einer Hochdruckmaschine in die Form eingebracht werden. Werden die erfindungsgemäßen Formteile mittels der Niederdrucktechnik hergestellt, wird bevorzugt zusätzlich zum Wasser physikalisch wirkende Treibmittel eingesetzt, bevorzugt Kohlendioxid, n-Pentan, 2-Methylbutan und/oder Cyclopentan. Als Treibmittel können gegebenenfalls auch verkapselte physikalische Treibmittel eingesetzt werden, die beispielsweise unter der Marke Expancell vertrieben werden.

Bei der erfindungsgemäßen Herstellung der Formteile können Hilfsstoffe (g) eingesetzt werden. Dazu zählen beispielsweise allgemein bekannte oberflächenaktive Substanzen, Schaumstabilisatoren, Zellregler, Füllstoffe, Flammschutzmittel, Keimbildungsmittel, Oxidationsverzögerer, Stabilisatoren, Gleit- und Entformungshilfsmittel, Farbstoffe und Pigmente. Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie z.B. die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinasphthylmethandisulfonsäure und Ricinolsäure; Schaumstabilisatoren, wie Siloxan-Oxalkylen-Mischpolymerisate und andere Organosiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile Vernetzerkomponente (ii) angewandt.

Als Füllstoffe, inbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstofe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Blähgraphit, Kollophonium, Cyclopentadienylharze und Pfropfpolymerisate. Als verstärkend wirkende Füllstoffe finden vorzugsweise Anwendung Fasern, beispielsweise Kohlefasern oder Glasfasern, besonders dann, wenn eine hohe Wärmeformbeständigkeit oder sehr hohe Steifigkeit gefordert wird, wobei die Fasern mit Haftvermittlern und/oder Schlichten ausgerüstet sein können. Die anorganischen und organischen Füllstoffe können einzeln oder als Gemische verwendet werden und werden der Vernetzerkomponente (ii) üblicherweise in Mengen von 0,5 bis 50 Gew.-%, vorzugsweise 1 bis 20 Gew.-% einverleibt.

Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel wie roter Phosphor, Aluminiumoxidhydrat, Antimontrioxid, Arsentrioxid, Ammoniumpolyphosphat und Calciumsulfat oder Cyanursäurederivate, wie z.B. Melamin oder Mischungen aus mindestens zwei Flammschutzmitteln, wie z.B. Ammoniumphosphaten und Melamin sowie gegebenenfalls Stärke und/oder Blähgraphit zum Flammfestmachen der erfindungsgemäß hergestellten zelligen PU-Elastomere verwendet werden. Im allgemeinen hat es sich als zweckmäßig erwiesen, 1 bis 10 Gew.-% im zylindrischen Formkörper einzusetzen.

Als Keimbildungsmittel können z.B. Talkum, Calciumfluorid, Natriumphenylphosphinat, Aluminiumoxid und feinteiliges Polytetrafluorethylen in Mengen bis zu 5 Gew.-%, bezogen auf das Gesamtgewicht des zylindrischen Formkörpers, eingesetzt werden. Geeignete Oxidationsverzögerer und Wärmestabilisatoren, die den erfindungsgemäßen zelligen PU-Elastomeren zugesetzt werden können, sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Jodiden, sterisch gehinderte Phenole, Hydrochinone, sowie substituierte Verbindungen dieser Gruppen und Mischungen davon, die vorzugsweise in Konzentrationen bis zu 1 Gew.-%, bezogen auf das Gesamtgewicht des zylindrischen Formkörpers, verwendet werden.

Gleit- und Entformungsmittel, die in der Regel ebenfalls in Mengen bis zu 1 Gew.-%, bezogen auf das Gesamtgewicht des zylindrischen Formkörpers, zugesetzt werden, sind Stearinsäure, Stearylalkohol, Stearinsäureester und -amide sowie die Fettsäureester des Pentaerythrits. Ferner können organische Farbstoffe, wie Nigrosin, Pigmente, wie z.B. Titandioxid, Cadmiumsulfid, Cadmiumsulfidselenid, Phthalocyanine, Ultramarinblau oder Ruß zugesetzt werden.

Nähere Angaben über die oben genannten anderen üblichen Hilfs- und Zusatzstoffe sind der Fachliteratur zu entnehmen.

Durch die nachfolgenden Beispiele soll die Erfindung näher erläutert werden.

Zur optimalen Vergleichbarkeit wurden alle Beispielrezepturen mit gleichem Index 0,98 und gleicher mittlerer Polyolfunktionalität 2,0 verschäumt. Die statisch-mechanischen Eigenschaften wurden aus Blöcken, die dynamisch-mechanischen Eigenschaften aus Federelementen (s. Abb. 1) ermittelt.

Abb.1: Federelement

Beispiel 1 (erfindungsgemäß) ($\overline{M}$(Polyol) :3600 g/mol)

1) Herstellung des NCO-gruppenhaltigen Prepolymeren

61,5 Gew.-Teile 4,4'-Diisocyanatodiphenylmethan (Lupranat® MES der BASF Aktiengesellschaft) und 2 Gew.-Teile uretoniminmodifiziertes MDI (Lupranat® MM 103 der BASF Aktiengesellschaft) wurden in einem Dreihalskolben unter Stickstoffatmosphäre aufgeschmolzen und bei 80°C unter Rühren mit einer Mischung aus 4 Gew.-Teile Tripropylenglykol und 32,5 Gew.-Teilen eines Polypropylenoxid (Propylenglykol als Startmolekül, Hydroxylzahl von 56 mg KOH/g, Molekulargewicht 1970 g/mol) versetzt. Die Mischung wurde zur vollständigen Umsetzung 1 Stunden auf 80°C erwärmt und anschließend abgekühlt. Es resultierte eine fast farblose Flüssigkeit mit einem NCO-Gehalt von 17,9 % und einer Viskosität von 800 mPas bei 25°C. Die Flüssigkeit war bei Raumtemperatur wochenlang lagerstabil.

2) Herstellung der Vernetzerkomponente:

| | |
|---|---|
| 46 Gew.-Teile | Polyoxypropylen (80 Gew.-%)-polyoxyethylen (20 Gew.-%)-glykol mit der Hydroxylzahl 29 mgKOH/g und dem Molekular-gewicht 3410 g/mol, hergestellt unter Verwendung von Propy-lenglykol als Startmolekül |
| 37,6 Gew.-Teile | Polyoxypropylen (80 Gew.-%)-polyoxyethylen (20 Gew.-%)-glykol mit der Hydroxylzahl 27 mg KOH/g und dem Molekular-gewicht 5180 g/mol, hergestellt unter Verwendung von Glyce-rin als Startmolekül |
| 12,2 Gew.-Teile | Butandiol-1,4 |
| 0,3 Gew.-Teile | Wasser |
| 0,1 Gew.-Teile | Di-n-octylzinn bis (2-ethylhexlthioglycolat) |
| 0,3 Gew.-Teile | Schaumstabilisator auf Silikonbasis (DC 193 der Firma Dow Corning) |
| 1,9 Gew.-Teile | Mischung aus Lupragen® N 203 (BASF Aktiengesellschaft) und Niax® catalyst E-A-1 (GE Silicones), Katalysatoren |
| 1,6 Gew.-Teile | Cyclopentan |

3) Herstellung des zylindrischen Formkörpers

100 Gew.-Teile des Prepolymeren gemäß (1) wurden mit 114 Gew.-Teilen der Vernetzerkomponente gemäß (2) mit Hilfe einer Niederdruckgießmaschine bei 30°C Komponententemperatur gemischt, die Mischung in ein auf 55°C temperiertes, verschließbares Formwerkzeug (z.B. mit der Federgeometrie gemäß Abb. 1)eingebracht und der Schaum bei 55°C für 12 min ausgehärtet. Nach Entformung des mikrozellulären Produktes wurde das Formteil 14 h bei 95°C thermisch nachgehärtet.

Beispiel 2 (erfindungsgemäß) ($\overline{M}$(Polyol) :3300 g/mol)

1) Herstellung des NCO-gruppenhaltigen Prepolymeren

54 Gew.-Teile 4,4'-Diisocyanatodiphenylmethan (Lupranat® MES der BASF Aktiengesellschaft) und 2 Gew.-Teile uretoniminmodifiziertes MDI (Lupranat® MM 103 der BASF Aktiengesellschaft) wurden in einem Dreihalskolben unter Stickstoffatmosphäre aufgeschmolzen und bei 80°C unter Rühren mit einer Mischung aus 2 Gew.-Teile Tripropylenglykol und 42 Gew.-Teilen eines Polypropylenoxid (Acclaim™ Polyol 2200 der BAYER AG, Hydroxylzahl von 56 mg KOH/g, Molekulargewicht 2000 g/mol) versetzt. Die Mischung wurde zur vollständigen Umsetzung 1 Stunden auf 80°C erwärmt und anschließend abgekühlt. Es resultierte eine fast farblose Flüssigkeit mit einem NCO-Gehalt von 15,8 %. Die Flüssigkeit war bei Raumtemperatur wochenlang lagerstabil.

2) Herstellung der Vernetzerkomponente:

| | |
|---|---|
| 53,0 Gew.-Teile | Polyoxypropylen (80 Gew.-%)-polyoxyethylen (20 Gew.-%)-glykol mit der Hydroxylzahl 29 mgKOH/g und dem Molekular-gewicht 3410 g/mol, hergestellt unter Verwendung von Propylenglykol als Startmolekül |
| 28,2 Gew.-Teile | Polyoxypropylen (80 Gew.-%)-polyoxyethylen (20 Gew.-%)-glykol mit der Hydroxylzahl 27 mg KOH/g und dem Molekular-gewicht 5180 g/mol, hergestellt unter Verwendung von Glycerin als Startmolekül |
| 14,1 Gew.-Teile | Butandiol-1,4 |
| 0,4 Gew.-Teile | Wasser |
| 0,1 Gew.-Teile | Di-n-octylzinn bis (2-ethylhexlthioglycolat) |
| 0,3 Gew.-Teile | Schaumstabilisator auf Silikonbasis (DC 193 der Firma Dow Coming) |
| 2,3 Gew.-Teile | Mischung aus Lupragen® N 203 und Niax® catalyst E-A-1 (GE Silicones) |
| 1,6 Gew.-Teile | Cyclopentan |

3) Herstellung des zylindrischen Formkörpers

100 Gew.-Teile des Prepolymeren wurden mit 86 Gew.-Teilen Vernetzerkomponente bei 23°C intensiv gemischt und die Mischung in ein auf 55°C temperiertes, verschließbares Formwerkzeug eingebracht und der Schaum bei 55°C für 12 min ausgehärtet. Nach Entformung des mikrozellulären Produktes wurde das Formteil 14 h bei 95 bis 110°C thermisch nachgehärtet.

Vergleichsbeispiel 1_($\overline{M}$(Polyol) :4100 g/mol)

1) Herstellung des NCO-gruppenhaltigen Prepolymeren

44 Gew.-Teile 4,4'-Diisocyanatodiphenylmethan (Lupranat® MES der BASF Aktiengesellschaft) und 2,6 Gew.-Teile uretoniminmodifiziertes MDI (Lupranat® MM 103 der BASF Aktiengesellschaft) wurden in einem Dreihalskolben unter Stickstoffatmosphäre aufgeschmolzen und bei 80°C unter Rühren mit einer Mischung aus 1 Gew.-Teile Dipropylenglykol und 52,4 Gew.-Teilen eines Polyoxypropylen (80 Gew.-%)-polyoxyethylen (20 Gew.-%)-glykol (Propylenglykol als Startmolekül, Hydroxylzahl von 29 mg KOH/g, Molekulargewicht 3410 g/mol) versetzt. Die Mischung wurde zur vollständigen Umsetzung 1 Stunden auf 80°C erwärmt und anschließend abgekühlt. Es resultierte eine fast farblose Flüssigkeit mit einem NCO-Gehalt von 13,9%. Die Flüssigkeit war bei Raumtemperatur wochenlang lagerstabil.

2) Herstellung der Vernetzerkomponente:

| | |
|---|---|
| 24,7 Gew.-Teile | Polyoxypropylen (80 Gew.-%)-polyoxyethylen (20 Gew.-%)-glykol mit der Hydroxylzahl 29 mgKOH/g und dem Molekular-gewicht 3410 g/mol, hergestellt unter Verwendung von Propylenglykol als Startmolekül |
| 55,6 Gew.-Teile | Polyoxypropylen (80 Gew.-%)-polyoxyethylen (20 Gew.-%)-glykol mit der Hydroxylzahl 27 mg KOH/g und dem Molekular-gewicht 5180 g/mol, hergestellt unter Verwendung von Glycerin als Startmolekül |
| 14,2 Gew.-Teile | Butandiol-1,4 |
| 0,3 Gew.-Teile | Wasser |

| | |
|---|---|
| 0,1 Gew.-Teile | Di-n-octylzinn bis (2-ethylhexlthioglycolat) |
| 0,3 Gew.-Teile | Schaumstabilisator auf Silikonbasis (DC 193 der Firma Dow Coming) |
| 1,9 Gew.-Teile | Mischung aus Lupragen® N 203 und Niax® catalyst E-A-1 (GE Silicones) |
| 2,9 Gew.-Teile | Cyclopentan |

3) Herstellung des zylindrischen Formkörpers

100 Gew.-Teile Prepolymeren wurden mit mit 81 Gew.-Teilen Vernetzerkomponente mit Hilfe einer Niederdruckgießmaschine bei 30°C Komponententemperatur gemischt, die Mischung in ein auf 55°C temperiertes, verschließbares Formwerkzeug eingebracht und der Schaum bei 55°C für 12 min ausgehärtet. Nach Entformung des mikrozellulären Produktes wurde das Formteil 14 h bei 95°C thermisch nachgehärtet.

Vergleichsbeispiel 2_$\overline{M}$(Polyol) :4000 g/mol)

1) Herstellung des NCO-gruppenhaltigen Prepolymeren

Prepolymer von Beispiel 3

2) Herstellung der Vernetzerkomponente:

| | |
|---|---|
| 24,1 Gew.-Teile | Polyoxypropylen (80 Gew.-%)-polyoxyethylen (20 Gew.-%)-glykol mit der Hydroxylzahl 29 mgKOH/g und dem Molekular-gewicht 3410 g/mol, hergestellt unter Verwendung von Propylenglykol als Startmolekül |
| 52,7 Gew.-Teile | Polyoxypropylen (80 Gew.-%)-polyoxyethylen (20 Gew.-%)-glykol mit der Hydroxylzahl 27 mg KOH/g und dem Molekular-gewicht 5180 g/mol, hergestellt unter Verwendung von Glycerin als Startmolekül |
| 9,2 Gew.-Teile | Ethylenglykol |
| 8,6 Gew.-Teile | Diethylenglykol |
| 0,3 Gew.-Teile | Wasser |
| 0,1 Gew.-Teile | Di-n-octylzinn bis (2-ethylhexlthioglycolat) |
| 0,3 Gew.-Teile | Schaumstabilisator auf Silikonbasis (DC 193 der Firma Dow Coming) |
| 1,8 Gew.-Teile | Mischung aus Lupragen® N 203 und Niax® catalyst E-A-1 (GE Silicones) |
| 2,9 Gew.-Teile | Cyclopentan |

3) Herstellung des zylindrischen Formkörpers

100 Gew.-Teile Prepolymeren wurden mit mit 62 Gew.-Teilen Vernetzerkomponente mit Hilfe einer Niederdruckgießmaschine bei 30°C Komponententemperatur gemischt, die Mischung in ein auf 55°C temperiertes, verschließbares Formwerkzeug eingebracht und der Schaum bei 55°C für 12 min ausgehärtet. Nach Entformung des mikrozellulären Produktes wurde das Formteil 14 h bei 95°C thermisch nachgehärtet.

Vergleichsbeispiel 3 ($\overline{M}$(Polyol) :4000 g/mol)

1) Herstellung des NCO-gruppenhaltigen Prepolymeren

44,4 Gew.-Teile 4,4'-Diisocyanatodiphenylmethan (Lupranat® MES der BASF Aktiengesellschaft) und 2 Gew.-Teile uretoniminmodifiziertes MDI (Lupranat® MM 103 der BASF Aktiengesellschaft) wurden in einem Dreihalskolben unter Stickstoffatmosphäre aufgeschmolzen und bei 80°C unter Rühren mit einer Mischung aus 2 Gew.-Teile Dipropylenglykol und 51,6 Gew.-Teilen eines Polyoxypropylenglykol (Acclaim™ Polyol 4200 der BAYER AG, Hydroxylzahl von 28 mg KOH/g, Molekulargewicht 4000 g/mol) versetzt. Die Mischung wurde zur vollständigen Umsetzung 1 Stunden auf 80°C erwärmt und anschließend abgekühlt. Es resultierte eine fast farblose Flüssigkeit mit einem NCO-Gehalt von 15,8%. Die Flüssigkeit war bei Raumtemperatur wochenlang lagerstabil.

2) Herstellung der Vernetzerkomponente:

| 52,1 Gew.-Teile | Polyoxypropylen (80 Gew.-%)-polyoxyethylen (20 Gew.-%)-glykol mit der Hydroxylzahl 29 mgKOH/g und dem Molekular-gewicht 3410 g/mol, hergestellt unter Verwendung von Propylenglykol als Startmolekül |
|---|---|
| 26,9 Gew.-Teile | Polyoxypropylen (80 Gew.-%)-polyoxyethylen (20 Gew.-%)-glykol mit der Hydroxylzahl 27 mg KOH/g und dem Molekular-gewicht 5180 g/mol, hergestellt unter Verwendung von Glycerin als Startmolekül |
| 16,7 Gew.-Teile | Butandiol-1,4 |
| 0,4 Gew.-Teile | Wasser |
| 0,1 Gew.-Teile | Di-n-octylzinn bis (2-ethylhexlthioglycolat) |
| 0,3 Gew.-Teile | Schaumstabilisator auf Silikonbasis (DC 193 der Firma Dow Corning) |
| 1,8 Gew.-Teile | Mischung aus Lupragen® N 203 und Niax® catalyst E-A-1 (GE Silicones) |
| 1,8 Gew.-Teile | Cyclopentan |

3) Herstellung des zylindrischen Formkörpers

100 Gew.-Teile des Prepolymeren wurden mit 80 Gew.-Teilen Vernetzerkomponente bei 23°C intensiv gemischt und die Mischung in ein auf 55°C temperiertes, verschließbares Formwerkzeug eingebracht und der Schaum bei 55°C für 12 min ausgehärtet. Nach Entformung des mikrozellulären Produktes wurde das Formteil 14 h bei 95 bis 110°C thermisch nachgehärtet.

Die Formkörper wurden unter den im Folgenden dargestellten Bedingungen auf ihre mechanischen und dynamischen Eigenschaften geprüft.

Prüfbedingungen

Die Glastemperatur wurde mittels nach ISO 6721-7 an S3A-Zugstäben aus dem Fertigteil mit Hilfe eines Torsionsschwingers nach dem Prinzip der erzwungenen Schwingung ermittelt. Die Glasübergangstemperatur wurde beim Maximum des Verlustmoduls G" bestimmt. Dabei wurden die Proben auf -80°C abgekühlt, 5 min bei dieser Temperatur gehalten und anschließend mit einer Heizrate von 2 K/min auf 40°C erwärmt. Die Messfrequenz betrug 1 Hz. Die statisch-mechanischen Eigenschaften, die Dichte der Prüfkörper betrug jeweils 0,5 g/cm$^3$, wurden anhand der Zugfestigkeit nach DIN EN ISO 845, der Bruchdehnung nach DIN EN ISO 1798, der Weiterreißfestigkeit nach DIN ISO 34-1 B(b)und dem Druckverformungsrest bei 70°C in Anlehnung zur DIN EN ISO 1798 unter Verwendung von 18 mm hohen Abstandsstücken und Prüfkörpern mit einer Grundfläche von 40 x 40 mm und einer Höhe von 30 ± 1 mm gemessen. Die Berechnung des Druckverformungsrestes (DVR) erfolgte nach der Gleichung

$$DVR = [(H_0 – H_2)/(H_0 – H_1)]*100[\%]$$

in der bedeutet

$H_0$  die ursprüngliche Höhe des Prüfkörpers in mm,
$H_1$  die Höhe des Prüfkörpers in verformtem Zustand in mm,
$H_2$  die Höhe des Prüfkörpers nach der Entspannung in mm.

Die dynamisch-mechanischen Eigenschaften der Prüfkörper wurden anhand des Setzbetrages bestimmt. Die Prüfkörper bestanden aus einer zylindrischen Prüffeder (s. Abb.1). Die Prüfkörper wurden 100000 Lastwechsel mit einer Kraft von 4 kN und einer Frequenz von 1,2 Hz belastet. Die Ermittlung der Höhe $H_R$ zur Bestimmung des Setzbetrages nach der dynamischen Prüfung erfolgte nach Aufnahme der Kennlinie der Feder: $H_0$ ist die Ausgangshöhe. Der Formkörper wurde dreimal mit maximaler Kraft vorgedrückt. Dann wurde im 4. Cyclus die Kennlinie aufgenommen. Die Eindrückgeschwindigkeit betrug 50 mm/min. Nach 10 min wurde $H_1$ bestimmt, d.h. die des Bauteils nach Aufnahme der Kennlinie. Erst danach startet die dynamische Prüfung. Nach der dynamischen mechanischen Prüfung der Prüfkörper wurde der Setzbetrag (SB) nach der folgenden Gleichung ermittelt:

$$SB = [(H_0 – H_R)/H_0)]*100[\%]$$

in der bedeutet

$H_0$ die ursprüngliche Höhe des Prüfkörpers in mm,

$H_R$ Resthöhe des Prüfkörpers nach der dynamischen Prüfung, gemessen nach 24 Stunden Lagerung bei 23°C und 50 % Luftfeuchtigkeit.

Der Setzbetrag ist ein Maß für die bleibende Verformung des zelligen PU-Elastomeren während des Dauerschwingversuches. Je kleiner dieser Wert ist, desto höher ist die dynamische Leistungsfähigkeit des Materials. Die dynamischen Prüfungen erfolgten unter Ventilatorkühlung in einem klimatisierten Raum bei 23°C und 50 % relativer Luftfeuchtigkeit.

Tabelle 1: Materialeigenschaften der mikrozellulären Polyurethane

| Beispiel | Einheit | 1 | 2 | Vergl.1 | Vergl.2 | Vergl.3 | Messung |
|---|---|---|---|---|---|---|---|
| $\overline{M}$(Polyol) [*] | [g/mol] | 3600 | 3300 | 4100 | 4000 | 4000 | Berechnung s. Text |
| Hartsegmentanteil | [Gew-%] | 39 | 38 | 34 | 37 | 39 | Berechnung s. Text |
| Statisch-mechanische Eigenschaften: | | | | | | | |
| Bauteildichte | [kg/m$^3$] | 430 | 440 | 460 | 430 | 440 | DIN EN ISO 845 |
| Zugfestigkeit | [MPa] | 2,9 | 2,3 | 3,2 | 3,3 | 2,3 | DIN EN ISO 1798 |
| Bruchdehnung | [%] | 340 | 240 | 390 | 410 | 200 | DIN EN ISO 1798 |
| Weiterreißfestigkeit | [N/mm] | 11 | 11 | 12 | 10 | 12 | DIN ISO 34- 1B(b) |
| Setzbetrag bei 70°C (22 h mit 40% Verformung) | [%] | 8 | 9 | 9 | 9 | 9 | DIN EN ISO 1856 |
| Zugfestigkeitsabnahme in feuchter warmer Umgebung: | | | | | | | |
| Relative Zugfestigkeitsabnahme in feuchter warmer Umgebung[***] nach Lagerzeit von mehreren Tagen (d)    [%]    0 d | | 100 | 100 | 100 | 100 | 100 | DIN EN ISO 1798 |
| 7 d | | 96 | 99 | 64 | 84 | 83 | |
| 14 d | | 92 | 97 | 56 | 72 | 72 | |
| 21 d | | 87 | 95 | 50 | 63 | 57 | |
| 42 d | | 77 | 77 | 36 | nm[**] | 50 | |
| 56 d | | 70 | 66 | 33 | nm[**] | 41 | |
| 70 d | | 63 | 66 | 30 | nm[**] | 37 | |
| 80 d | | 68 | 68 | 27 | nm[**] | 34 | |
| Kälteflexibilität: | | | | | | | |
| Glastemperatur (Max. Verlustmoduls G"$_{max}$) | [°C] | -53 | nm[**] | -58 | -57 | nm[**] | ISO 6721-7 |
| Dynamisch-mechanische Eigenschaften: | | | | | | | |
| Setzbetrag[****] einer Feder (s. Abb. 1) | [%] | 9 | 9 | 9 | zerstört | 11 | Prüfbedingung[****] |

[*] $\overline{M}$(Polyol) : mittlere Polyolmolmasse der Polyetherole
[**] nm = nicht gemessen
[***] Lagerung von Zugfestigkeitsprobekörpern in 80°C temperiertem demineralisiertem Wasser für einen Zeitraum von bis zu 80 Tagen. Entnommene Probekörper wurden 30 min bei 23 °C abgekühlt und anschließend die Zugfestigkeit gemäß DIN EN ISO 1798 bestimmt.
[****] Dynamische Prüfbedingungen: Last 4 kN; Frequenz 1,2 Hz; Lastwechselzahl 100000 Zyklen; Ventilatorkühlung; der prozentuale Setzbetrag (SB) ergibt sich aus dem prozentualen Verhältnis der Resthöhe der Feder nach der Prüfung ($H_R$) zur Federausgangshöhe $H_O$ vor der Prüfung: SB = $[(H_O-H_R)/H_O]*100[\%]$

**Patentansprüche**

1. Zylindrischer Formkörper auf der Basis von zelligen Polyurethanelastomeren mit einer Dichte nach DIN EN ISO 845 zwischen 300 und 900 kg/m$^3$, einer Zugfestigkeit nach DIN EN ISO 1798 von $\geq$ 2,0 N/mm$^2$, einer Bruchdehnung nach DIN EN ISO 1798 von $\geq$ 200 % und einer Weiterreißfestigkeit nach DIN ISO 34-1 B (b) von $\geq$ 8 N/mm, **dadurch gekennzeichnet, dass** das zellige Polyurethanelastomer basiert auf der Umsetzung

(i) eines Isocyanatgruppen ausweisenden Prepolymers auf der Basis von (a) Methylendiphenyldiisocyanat (MDI) und

(b1) Polyetherdiol mit einem Molekulargewicht zwischen 1500 g/mol und 3000 g/mol auf der Basis von Propylenoxid und/oder Ethylenoxid,

mit

(ii) einer Vernetzerkomponente enthaltend

(b2) Polyetheralkohol mit einer nominellen Funktionalität gegenüber Isocyanaten von 2 bis 3 und einem Molekulargewicht zwischen 1500 g/mol und 6000 g/mol auf der Basis von Propylenoxid und/oder Ethylenoxid,

(c2) Diol mit einem Molekulargewicht zwischen 62 g/mol und 499 g/mol,

(d) Wasser und

(e) Katalysatoren,

wobei die im zylindrischen Formkörper enthaltenen Polyole (b) enthaltend (b1) und (b2) eine zahlenmittlere Polyolmolmasse zwischen 3000 g/mol und 3700 g/mol besitzen, wobei sich die zahlenmittlere Polyolmolmasse $\overline{M}$(Poloyol) berechnet nach der folgenden Formel:

$$\overline{M}(Polyol)=\frac{(M_{b11}*m_{b11}+...+M_{b1n}*m_{b1n})*W_P+(M_{b21}*m_{b21}+...+M_{b2n}*m_{b2n})*W_V}{(m_{b11}+...+m_{b1n})*W_P+(m_{b21}+...+m_{b2n})*W_V}$$

mit den folgenden Bedeutungen:

$\overline{M}$(Polyol) : zahlenmittlere Polyolmolmasse in g/mol

$M_{b11}$ (bzw. $M_{b1n}$): Molmasse von Polyol b11 (bzw. Polyol b1n) im Prepolymer (i) in g/mol

$m_{b11}$ (bzw. $m_{b1n}$): Massenanteil von Polyol b11 (bzw. Polyol b1n) im Prepolymer (i) in g/g

$W_P$: Massenanteil des Prepolymers (i) im zylindrischen Formkörper in g/g

$M_{b21}$ (bzw. $M_{b2n}$): Molmasse von Polyol b21 (bzw. Polyol b2n) in der Vernetzerkomponente (ii) in g/mol

$m_{b21}$ (bzw. $m_{b2n}$): Massenanteil von Polyol b21 (bzw. Polyol b2n) in der Vernetzerkomponente (ii) in g/g

$W_V$: Massenanteil der Vernetzerkomponente (ii) im zylindrischen Formkörper in g/g.

2. Zylindrischer Formkörper gemäß Anspruch 1, **dadurch gekennzeichnet, dass** das Isocyanatgruppen aufweisende Prepolymer basiert auf der Umsetzung von (a) Methylendiphenyldiisocyanat (MDI), (b1) Polyetherdiolen mit einem Molekulargewicht zwischen 1500 g/mol und 3000 g/mol auf der Basis von Propylenoxid und/oder Ethylenoxid sowie (c1) Diol mit einem Molekulargewicht zwischen 62 g/mol und 499 g/mol.

3. Zylindrischer Formkörper gemäß Anspruch 1, **dadurch gekennzeichnet, dass** die Vernetzerkomponente (ii) als Treibmittel (f) n-Pentan, 2-Methylbutan und/oder Cyclopentan enthält.

4. Zylindrischer Formkörper gemäß Anspruch 1, **dadurch gekennzeichnet, dass** der Formkörper eine Höhe zwischen 25 mm und 1000 mm, einem maximalen äußeren Durchmesser zwischen 40 mm und 700 mm und einen minimalen Durchmesser des Hohlraums zwischen 0 mm und 90 mm aufweist.

5. Automobilfahrwerk enthaltend Stossdämpfer, auf dessen Kolbenstange ein hohler zylindrischer Formkörper gemäß einem der Ansprüche 1 bis 4 platziert ist.

6. Verfahren zur Herstellung von zylindrischen Formkörpern auf der Basis von zelligen Polyurethanelastomeren mit einer Dichte nach DIN EN ISO 845 zwischen 300 und 900 kg/m$^3$, einer Zugfestigkeit nach DIN EN ISO 1798 von $\geq$ 2,0 N/mm$^2$, einer Bruchdehnung nach DIN EN ISO 1798 von $\geq$ 200 % und einer Weiterreißfestigkeit nach DIN ISO 34-1 B (b) von $\geq$ 8 N/mm, **dadurch gekennzeichnet, dass** das zellige Polyurethanelastomer basiert auf der Umsetzung

(i) eines Isocyanatgruppen ausweisenden Prepolymers auf der Basis von (a) Methylendiphenyldiisocyanat (MDI) und

(b1) Polyetherdiol mit einem Molekulargewicht zwischen 1500 g/mol und 3000 g/mol auf der Basis von Propylenoxid und/oder Ethylenoxid,

mit

(ii) einer Vernetzerkomponente enthaltend

(b2) Polyetheralkohol mit einer nominellen Funktionalität gegenüber Isocyanaten von 2 bis 3 und einem Molekulargewicht zwischen 1500 g/mol und 6000 g/mol auf der Basis von Propylenoxid und/oder Ethylenoxid,
(c2) Diol mit einem Molekulargewicht zwischen 62 g/mol und 499 g/mol,
(d) Wasser und
(e) Katalysatoren,
wobei die im zylindrischen Formkörper enthaltenen Polyole (b) enthaltend (b1) und (b2) eine zahlenmittlere Polyolmolmasse zwischen 3000 g/mol und 3700 g/mol besitzen, wobei sich die zahlenmittlere Polyolmolmasse $\overline{M}$(Polyol) berechnet nach der folgenden Formel:

$$\overline{M}(Polyol) = \frac{(M_{b11} * m_{b11} + ... + M_{b1n} * m_{b1n}) * W_P + (M_{b21} * m_{b21} + ... + M_{b2n} * m_{b2n}) * W_V}{(m_{b11} + ... + m_{b1n}) * W_P + (m_{b21} + ... + m_{b2n}) * W_V}$$

mit den folgenden Bedeutungen:

$\overline{M}$(Polyol) : zahlenmittlere Polyolmolmasse in g/mol
$M_{b11}$ (bzw. $M_{b1n}$): Molmasse von Polyol b11 (bzw. Polyol b1n) im Prepolymer (i) in g/mol
$m_{b11}$ (bzw. $m_{b1n}$): Massenanteil von Polyol b11 (bzw. Polyol b1n) im Prepolymer (i) in g/g
$W_P$: Massenanteil des Prepolymers (i) im zylindrischen Formkörper in g/g
$M_{b21}$ (bzw. $M_{b2n}$): Molmasse von Polyol b21 (bzw. Polyol b2n) in der Vernetzerkomponente (ii) in g/mol
$m_{b21}$ (bzw. $m_{b2n}$): Massenanteil von Polyol b21 (bzw. Polyol b2n) in der Vernetzerkomponente (ii) in g/g
$W_V$: Massenanteil der Vernetzerkomponente (ii) im zylindrischen Formkörper in g/g.

7. Verfahren nach Anspruch 6, **dadurch gekennzeichnet, dass** man in einem zweistufigen Verfahren in der ersten Stufe das Isocyanatgruppen aufweisende Prepolymer (i) herstellt durch Umsetzung von (a) Methylendiphenyldiisocyanat (MDI) mit (b1) Polyetherdiolen mit einem Molekulargewicht zwischen 1500 g/mol und 3000 g/mol auf der Basis von Propylenoxid und/oder Ethylenoxid sowie mit (c1) Diol mit einem Molekulargewicht zwischen 62 g/mol und 499 g/mol und dieses Prepolymer in der zweiten Stufe in einer Form mit der Vernetzerkomponente (ii) umsetzt.

8. Verfahren nach Anspruch 6 oder 7, **dadurch gekennzeichnet, dass** das Prepolymer (i) basiert auf Methylendiphenyldiisocyanat (MDI) und Isocyanaten, die Carbodiimidstrukturen und/oder Uretoniminstrukturen aufweisen.

9. Verfahren nach Anspruch 6, **dadurch gekennzeichnet, dass** die Vernetzerkomponente als Treibmittel (f) n-Pentan, 2-Methylbutan und/oder Cyclopentan enthält.

10. Verfahren nach Anspruch 6, **dadurch gekennzeichnet, dass** man die zylindrischen Formkörper nach der Entformung aus der Form bei einer Temperatur zwischen 70°C 140°C für eine Dauer zwischen 1 und 48 Stunden tempert.

**Claims**

1. A cylindrical molding based on cellular polyurethane elastomers having a density according to DIN EN ISO 845 of from 300 to 900 kg/m$^3$, a tensile strength according to DIN EN ISO 1798 of $\geq$ 2.0 N/mm$^2$, an elongation at break according to DIN EN ISO 1798 of $\geq$ 200% and a tear propagation resistance according to DIN ISO 34-1 B (b) of $\geq$ 8 N/mm, wherein the cellular polyurethane elastomer is based on the reaction

(i) of a prepolymer having isocyanate groups and based on
(a) methylenediphenyl diisocyanate (MDI) and
(b1) polyetherdiol having a molecular weight of from 1500 g/mol to 3000 g/mol and based on propylene oxide and/or ethylene oxide,
with
(ii)a crosslinking component comprising
(b2) polyetheralcohol having a nominal functionality with respect to isocyanates of from 2 to 3 and a molecular weight of from 1500 g/mol to 6000 g/mol and based on propylene oxide and/or ethylene oxide,
(c2) diol having a molecular weight of from 62 g/mol to 499 g/mol,
(d) water and
(e) catalysts,

the polyols (b) present in the cylindrical molding and comprising (b1) and (b2) having a number-average polyol molar mass of from 3000 g/mol to 3700 g/mol, the number-average polyol molar mass $\overline{M}$(Polyol) being calculated according to the following formula:

$$\overline{M}(Polyol)=\frac{(M_{b11} \cdot m_{b11}+...+M_{b1n} \cdot m_{b1n}) \cdot W_P+(M_{b21} \cdot m_{b21}+...+M_{b2n} \cdot m_{b2n}) \cdot W_v}{(m_{b11}+...+m_{b1n}) \cdot W_P+(m_{b21}+...+m_{b2n}) \cdot W_v}$$

having the following meanings:

$\overline{M}$(Polyol) : Number-average polyol molar mass in g/mol
$M_{b11}$ (or $M_{b1n}$): Molar mass of Polyol b11 (or polyol b1n) in the prepolymer (i) in g/mol
$m_{b11}$ (or $m_{b1n}$) Mass fraction of polyol b11 (or polyol b1n) in the prepolymer (i) in g/g
$W_P$: Mass fraction of the prepolymer (i) in the cylindrical molding in g/g
$M_{b21}$ (or $M_{b2n}$): Molar mass of polyol b21 (or polyol b2n) in the crosslinking component (ii) in g/mol
$m_{b21}$ (or $m_{b2n}$) : Mass fraction of polyol b21 (or polyol b2n) in the crosslinking component (ii) in g/g
$W_V$: Mass fraction of the crosslinking component (ii) in the cylindrical molding in g/g.

2. The cylindrical molding according to claim 1, wherein the prepolymer having isocyanate groups is based on the reaction of (a) methylenediphenyl diisocyanate (MDI), (b1) polyetherdiols having a molecular weight of from 1500 g/mol to 3000 g/mol and based on propylene oxide and/or ethylene oxide and (c1) diol having a molecular weight of from 62 g/mol to 499 g/mol.

3. The cylindrical molding according to claim 1, wherein the crosslinking component (ii) comprises n-pentane, 2-methylbutane and/or cyclopentane as blowing agent (f).

4. The cylindrical molding according to claim 1, wherein the molding has a height of from 25 mm to 1000 mm, a maximum external diameter of from 40 mm to 700 mm and a minimum diameter of the cavity of from 0 mm to 90 mm.

5. An automobile chassis comprising a shock absorber on whose piston rod a hollow cylindrical molding according to any of claims 1 to 4 is placed.

6. A process for the production of cylindrical moldings based on cellular polyurethane elastomers having a density according to DIN EN ISO 845 of from 300 to 900 kg/m$^3$, a tensile strength according to DIN EN ISO 1798 of $\geq$ 2.0 N/mm$^2$, an elongation at break according to DIN EN ISO 1798 of $\geq$ 200% and a tear propagation resistance according to DIN ISO 34-1 B (b) of $\geq$ 8 N/mm, wherein the cellular polyurethane elastomer is based on the reaction

(i) of a prepolymer having isocyanate groups and based on
(a) methylenediphenyl diisocyanate (MDI) and
(b1) polyetherdiol having a molecular weight of from 1500 g/mol to 3000 g/mol and based on propylene oxide and/or ethylene oxide,
with
(ii) a crosslinking component comprising
(b2) polyetheralcohol having a nominal functionality with respect to isocyanates of from 2 to 3 and a molecular weight of from 1500 g/mol to 6000 g/mol and based on propylene oxide and/or ethylene oxide,
(c2) diol having a molecular weight of from 62 g/mol to 499 g/mol,
(d) water and
(e) catalysts,

the polyols (b) present in the cylindrical molding and comprising (b1) and (b2) having a number-average polyol molar mass of from 3000 g/mol to 3700 g/mol, the number-average polyol molar mass $\overline{M}$(Polyol) being calculated according to the following formula:

$$\overline{M}(Polyol)=\frac{(M_{b11} \cdot m_{b11}+...+M_{b1n} \cdot m_{b1n}) \cdot W_P+(M_{b21} \cdot m_{b21}+...+M_{b2n} \cdot m_{b2n}) \cdot W_v}{(m_{b11}+...+m_{b1n}) \cdot W_P+(m_{b21}+...+m_{b2n}) \cdot W_v}$$

having the following meanings:

$\overline{M}$(Polyol) : Number-average polyol molar mass in g/mol

$M_{b11}$ (or $M_{b1n}$): Molar mass of polyol b11 (or polyol b1n) in the prepolymer (i) in g/mol

$m_{b11}$ (or $m_{b1n}$): Mass fraction of polyol b11 (or polyol b1n) in the prepolymer (i) in g/g

$W_P$: Mass fraction of the prepolymer (i) in the cylindrical molding in g/g

$M_{b21}$ (or $M_{b2n}$): Molar mass of polyol b21 (or Polyol b2n) in the crosslinking component (ii) in g/mol

$m_{b21}$ (or $m_{b2n}$) : Mass fraction of polyol b21 (or polyol b2n) in the crosslinking component (ii) in g/g

$M_V$: Mass fraction of the crosslinking component (ii) in the cylindrical molding in g/g.

7. The process according to claim 6, wherein, in a two-stage process, the prepolymer (i) having isocyanate groups is prepared in the first stage by reacting (a) methylenediphenyl diisocyanate (MDI) with (b1) polyetherdiols having a molecular weight of from 1500 g/mol to 3000 g/mol and based on propylene oxide and/or ethylene oxide and with (c1) diol having a molecular weight of from 62 g/mol to 499 g/mol, and this Prepolymer is reacted in the second stage in a mold with the crosslinking component (ii).

8. The process according to claim 6 or 7, wherein the prepolymer (i) is based on methylenediphenyl diisocyanate (MDI) and isocyanates which have carbodiimide structures and/or uretonimine structures.

9. The process according to claim 6, wherein the crosslinking component comprises n-pentane, 2-methylbutane and/or cyclopentane as blowing agent (f).

10. The process according to claim 6, wherein, after removal from the mold, the cylindrical moldings are annealed at a temperature of from 70°C to 140°C for a duration of from 1 to 48 hours.

**Revendications**

1. Corps façonné cylindrique à base d'élastomères de polyuréthane cellulaires, présentant une densité selon la norme DIN EN ISO 845 entre 300 et 900 kg/m$^3$, une résistance à la traction selon la norme DIN EN ISO 1798 $\geq$ 2,0 N/mm$^2$, un allongement à la rupture selon la norme DIN EN ISO 1798 $\geq$ 200% et une résistance à la propagation d'une déchirure selon la norme DIN ISO 34-1 B (b) $\geq$ 8 N/mm, **caractérisé en ce que** l'élastomère de polyuréthane cellulaire est basé sur la transformation

(I) d'un prépolymère présentant des groupes isocyanate à base de
(a) méthylènediphényldiisocyanate (MDI) et
(b1) polyétherdiol présentant un poids moléculaire entre 1500 g/mole et 3000 g/mole à base d'oxyde de propylène et/ou d'oxyde d'éthylène,
avec
(II) un composant de réticulation, contenant
(b2) un polyétheralcool présentant une fonctionnalité nominale par rapport aux isocyanates de 2 à 3 et un poids moléculaire entre 1500 g/mole et 6000 g/mole à base d'oxyde de propylène et/ou d'oxyde d'éthylène,
(c2) un diol présentant un poids moléculaire entre 62 g/mole et 499 g/mole,
(d) de l'eau et
(e) des catalyseurs,

les polyols (b) contenus dans le corps façonné cylindrique, contenant (b1) et (b2) présentant une masse molaire numérique moyenne de polyol entre 3000 g/mole et 3700 g/mole, la masse molaire numérique moyenne de polyol $\overline{M}$(polyol) étant calculée selon la formule suivante:

$$\overline{M}(Polyol) = \frac{(M_{b11} * m_{b11} + ... + M_{b1n} * m_{b1n}) * W_p + (M_{b21} * m_{b21} + ... + M_{b2n} * m_{b2n}) * W_v}{(m_{b11} + ... + m_{b1n}) * W_p + (m_{b21} + ... + m_{b2n}) * W_v}$$

avec les significations suivantes :

$\overline{M}$(polyol) : masse molaire numérique moyenne de polyol en g/mole

EP 1 856 175 B1

$M_{b11}$ (ou $M_{b1n}$) : masse molaire du polyol b11 (ou du polyol b1n) dans le prépolymère (i) en g/mole

$m_{b11}$ (ou $m_{b1n}$) : proportion massique du polyol b11 (ou du polyol b1n) dans le prépolymère (i) en g/g

$W_P$ : proportion massique du prépolymère (i) dans le corps façonné cylindrique, en g/g

$M_{b21}$ (ou $M_{b2n}$) : masse molaire du polyol b21 (ou du polyol b2n) dans le composant de réticulation (ii) en g/mole

$m_{b21}$ (ou $m_{b2n}$) : proportion massique du polyol b21 (ou du polyol b2n) dans le composant de réticulation (ii) en g/g

$W_V$ : proportion massique du composant de réticulation (ii) dans le corps façonné cylindrique, en g/g.

2. Corps façonné cylindrique selon la revendication 1, **caractérisé en ce que** le prépolymère présentant des groupes isocyanate est basé sur la transformation (a) de méthylènediphényldiisocyanate (MDI), (b1) de polyétherdiols présentant un poids moléculaire entre 1500 g/mole et 3000 g/mole à base d'oxyde de propylène et/ou d'oxyde d'éthylène ainsi que (c1) d'un diol présentant un poids moléculaire entre 62 g/mole et 499 g/mole.

3. Corps façonne cylindrique selon la revendication 1, **caractérisé en ce que** le composant de réticulation (ii) contient comme agent gonflant (f) du n-pentane, du 2-méthylbutane et/ou du cyclopentane.

4. Corps façonné cylindrique selon la revendication 1, **caractérisé en ce que** le corps façonné présente une hauteur entre 25 mm et 1000 mm, un diamètre extérieur maximal entre 40 mm et 700 mm et un diamètre minimal de l'espace creux entre 0 mm et 90 mm.

5. Suspension de voiture contenant des amortisseurs sur la tige desquels est placé un corps façonné cylindrique creux selon l'une quelconque des revendications 1 à 4.

6. Procédé pour la préparation de corps façonnés cylindriques à base d'élastomères de polyuréthane cellulaires, présentant une densité selon la norme DIN EN ISO 845 entre 300 et 900 kg/m$^3$, une résistance à la traction selon la norme DIN EN ISO 1798 $\geq$ 2,0 N/mm$^2$, un allongement à la rupture selon la norme DIN EN ISO 1798 $\geq$ 200% et une résistance à la propagation d'une déchirure selon la norme DIN ISO 34-1 B (b) $\geq$ 8 N/mm, **caractérisé en ce que** l'élastomère de polyuréthane cellulaire est basé sur la transformation

(I) d'un prépolymère présentant des groupes isocyanate à base de

(a) méthylènediphényldiisocyanate (MDI) et

(b1) polyétherdiol présentant un poids moléculaire entre 1500 g/mole et 3000 g/mole à base d'oxyde de propylène et/ou d'oxyde d'éthylène,

avec

(II) un composant de réticulation, contenant

(b2) un polyétheralcool présentant une fonctionnalité nominale par rapport aux isocyanates de 2 à 3 et un poids moléculaire entre 1500 g/mole et 6000 g/mole à base d'oxyde de propylène et/ou d'oxyde d'éthylène,

(c2) un diol présentant un poids moléculaire entre 62 g/mole et 499 g/mole,

(d) de l'eau et

(e) des catalyseurs,

les polyols (b) contenus dans le corps façonné cylindrique, contenant (b1) et (b2) présentant une masse molaire numérique moyenne de polyol entre 3000 g/mole et 3700 g/mole, la masse molaire numérique moyenne de polyol $\overline{M}$(polyol) étant calculée selon la formule suivante :

$$\overline{M}(Polyol) = \frac{(M_{b11} * m_{b11} + \ldots + M_{b1n} * m_{b1n}) * W_P + (M_{b21} * m_{b21} + \ldots + M_{b2n} * m_{b2n}) * W_V}{(m_{b11} + \ldots + m_{b1n}) * W_P + (m_{b21} + \ldots + m_{b2n}) * W_V}$$

avec les significations suivantes :

$\overline{M}$ (polyol) : masse molaire numérique moyenne de polyol en g/mole

$M_{b11}$ (ou $M_{b1n}$) : masse molaire du polyol b11 (ou du polyol b1n) dans le prépolymère (i) en g/mole

$m_{b11}$ (ou $m_{b1n}$) : proportion massique du polyol b11 (ou du polyol b1n) dans le prépolymère (i) en g/g

$W_P$ : proportion massique du prépolymère (i) dans le corps façonné cylindrique, en g/g

$M_{b21}$ (ou $M_{b2n}$) : masse molaire du polyol b21 (ou du polyol b2n) dans le composant de réticulation (ii) en g/mole

$m_{h21}$ (ou $m_{b2n}$) : proportion massique du polyol b21 (ou du polyol b2n) dans le composant de réticulation (ii) en g/g

$W_V$ : proportion massique du composant de réticulation (ii) dans le corps façonné cylindrique, en g/g.

20

**7.** Procédé selon la revendication 6, **caractérisé en ce que**, dans un procédé à deux étapes, dans la première étape, on transforme le prépolymère (i) présentant des groupes isocyanate préparé par transformation de (a) méthylenediphényldiisocyanate (MDI) avec (b1) des polyétherdiols présentant un poids moléculaire entre 1500 g/mole et 3000 g/mole à base d'oxyde de propylène et/ou d'oxyde d'éthylène ainsi que (c1) d'un diol présentant un poids moléculaire entre 62 g/mole et 499 g/mole et on transforme ce prépolymère dans la deuxième étape dans un moule avec le composant de réticulation (ii).

**8.** Procédé selon la revendication 6 ou 7, **caractérisé en ce que** le prépolymère (i) est à base de méthylènediphényldiisocyanate (MDI) et d'isocyanates, qui présentent des structures de carbodiimide et/ou d'urétonimine.

**9.** Procédé selon la revendication 6, **caractérisé en ce que** le composant de réticulation contient comme agent gonflant (f) du n-pentane, du 2-méthylbutane et/ou du cyclopentane.

**10.** Procédé selon la revendication 6, **caractérisé en ce qu'**on traite thermiquement le corps façonné cylindrique après le démoulage du moule à une température entre 70°C et 140°c pendant un laps de temps entre 1 et 48 heures.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3613650 A
- EP 178562 A
- WO 9611219 A
- DE 4438143 C